# EUROPEAN PATENT APPLICATION

(11) **EP 4 098 868 A1**
(43) Date of publication of application: **07.12.2022**
(21) Application number: 21305756.5
(22) Date of filing: 04.06.2021
(51) Int. Cl.: F03D 13/25, E02B 17/00

(54) **SUBMERGED ASSEMBLY FOR SUPPORTING AN OFFSHORE WIND TURBINE CARRIED ON A MONOPILE**

(71) Applicant: TotalEnergies OneTech, 92400 Courbevoie (FR)
(72) Inventor: BOUNHOURE, François, 78290 CROISSY SUR SEINE (FR)
(74) Representative: Lavoix

(57) **Abstract**

An assembly for producing offshore electricity comprising :
- a wind turbine (12),
- a monopile (14) extending along a vertical direction (V) and fully supporting the wind turbine, the monopile penetrating in a seabed (16), and
- a subsea jacket (18) comprising:
- a structure (20) anchored in the seabed and surrounding the monopile around the vertical direction, and
- a central guide (22) fixed on the structure and surrounding the monopile around the vertical direction while being vertically free with respect to the monopile, the structure being adapted for resisting horizontal loads (F2) applied by the monopile on the central guide due to bending movements of the monopile.

## Description

The present invention deals with an assembly for producing offshore electricity comprising a wind turbine.

It also deals with a method of building such an assembly.

As of today, most of the offshore bottom-fixed wind turbines comprises either a monopile or a jacket on which the tower of the turbine is fixed. To a lesser extent, there are also some examples of gravity based structures (GBS).

Jackets are made of steel tubes welded together and having a typical diameter between 0.5 and 1.5 m. They are able to withstand large efforts both horizontally and vertically, and allow accessing large water depths. However, jackets have to be tailor made and are rather expensive, especially for serial fabrication and installation.

Monopiles are recognized by the offshore wind industry as an economical bottom-fixed concept for serial installation of wind turbines, and are therefore preferred whenever possible. Their cost per installed MW can be significantly less than that of a jacket, for which supply chain and manufacturing process are completely different.

Monopiles have however their own limitations. First, the maximum diameter that can be efficiently obtained is around 10 to 11m. As a result, due to their relative slenderness, monopiles are limited to shallow areas, and are generally not competitive with jackets above 30-40m water depths, depending on soil and local weather conditions. The largest/longest monopiles are also heavy and difficult to handle onshore and to transport to the offshore site, and finally challenging to install by either driving or drilling/grouting.

An aim of the invention is to reduce the cost of offshore electricity in some situations where jackets are generally used, because monopiles would be too large to be produced and/or too expensive, or to further reduce the electricity cost in some situation where monopiles can be used.

To this end, the invention proposes an assembly for producing offshore electricity comprising:
- a wind turbine, and
- a monopile extending along a vertical direction and fully supporting the wind turbine, the monopile penetrating in a seabed,
it further includes a subsea jacket comprising:
- a structure anchored in the seabed and surrounding the monopile around the vertical direction, and
- a central guide fixed on the structure and surrounding the monopile around the vertical direction while being vertically free with respect to the monopile, the structure being adapted for resisting horizontal loads applied by the monopile on the central guide due to bending movements of the monopile.

In other embodiments, the assembly comprises one or several of the following features, taken in isolation or any technically feasible combination:
- the jacket further comprises a lower central guide fixed on the structure and surrounding the monopile around the vertical direction while being vertically free with respect to the monopile, the structure being adapted for resisting horizontal loads applied by the monopile on the lower central guide;
- the central guide comprises: a ring surrounding the monopile with clearance, and a plurality of friction pads located between the ring and the monopile and angularly distributed around the vertical direction;
- the friction pads comprise a composite material including a resin, a lubricant and optionally fibers;
- the assembly further comprises a plurality of metal centralizers fixed on the ring and having upper surfaces forming upwardly diverging chamfers;
- the metal centralizers define housings opening toward the monopile and respectively receiving the friction pads, the friction pads protruding radially from the housings toward the monopole;
- the friction pads have upper surfaces forming upwardly diverging chamfers;
- the assembly further comprises bracings radially connecting the central guide and the structure;
- each of the bracings comprises a frustoconical transition radially located next to the central guide or in between the central guide and the structure, the frustoconical transition thinning toward the structure;
- the structure comprises three or four legs extending along the vertical direction between the seabed and the central guide, and radially with respect to the monopile, the legs being angularly distributed around the monopole;
- the structure comprises braces between the legs;
- the monopile includes a suction bucket;
- the monopile has an average external diameter, and penetrates in the seabed over a height that is smaller than twice said average external diameter; and
- the monopile has an average external diameter ranging from 8.0 to 11.0 meters, and/or a height from seabed to top that is greater than 40 meters.

The invention also deals with a method of building an assembly as described above, comprising:
- anchoring the jacket in the seabed,
- bringing the monopile above the jacket and lowering the monopile in a vertical position through the central guide,
- introducing the monopile in the seabed, and
- fixing the wind turbine to the monopile.

The invention and its advantages will be better understood upon reading the following description, given solely by way of example and with reference to the appended drawings, in which:
- Figure 1 is a schematic side view of an assembly according to the invention,
- Figure 2 is a schematic side view of the monopile and subsea jacket of the assembly shown in Figure 1,
- Figure 3 is a schematic perspective view of the central guide of the jacket represented in Figures 1 and 2,
- Figure 4 is a schematic sectional view along a horizontal plan of the monopile and the central guide shown in Figures 1 to 3,
- Figure 5 is a side view of a bracing constituting a variant of the bracings represented in Figure 3,
- Figure 6 is a perspective view of a part of the central guide shown in Figure 1 to 3 and 5, and
- Figure 7 is a sectional view of the part shown in Figure 6 along a radial plan with respect to the monopile.

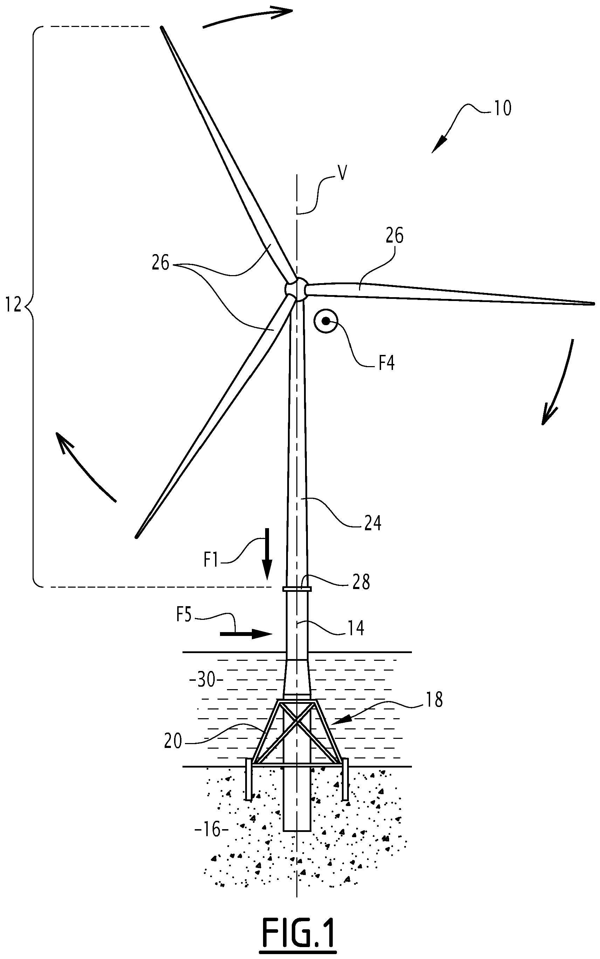

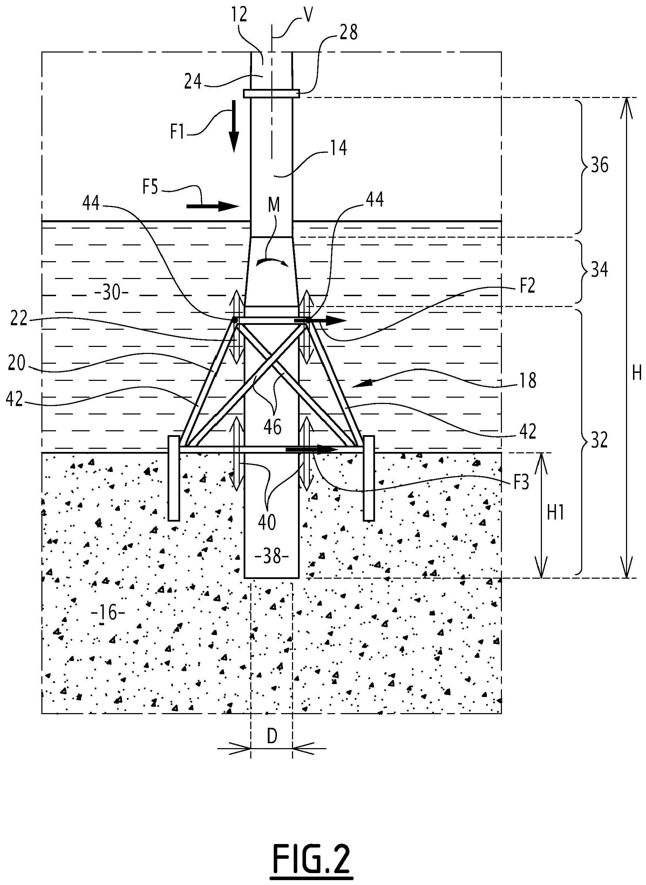

An assembly 10 according to the invention will now be described with reference to Figures 1 and 2. The assembly 10 is adapted for producing offshore electricity.

The assembly 10 comprises a wind turbine 12, and a monopile 14 extending along a vertical direction V and fully supporting the wind turbine, the monopile penetrating in a seabed 16.

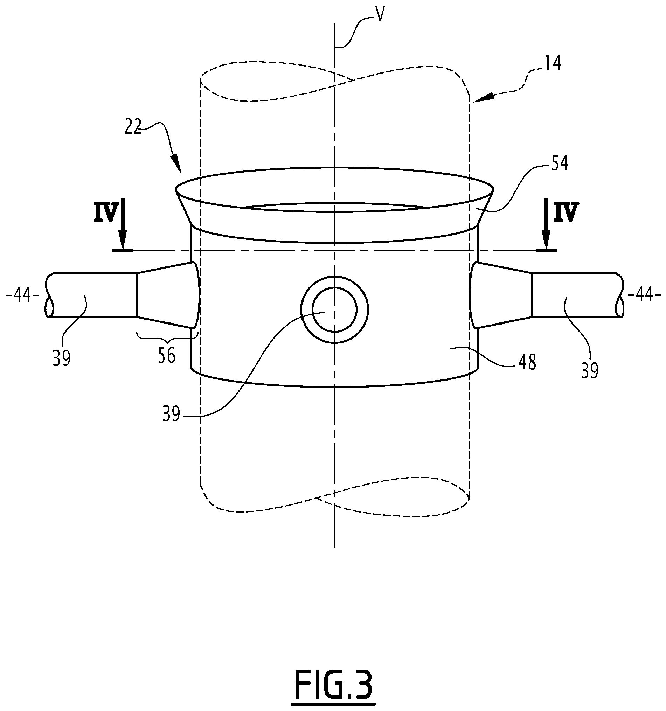

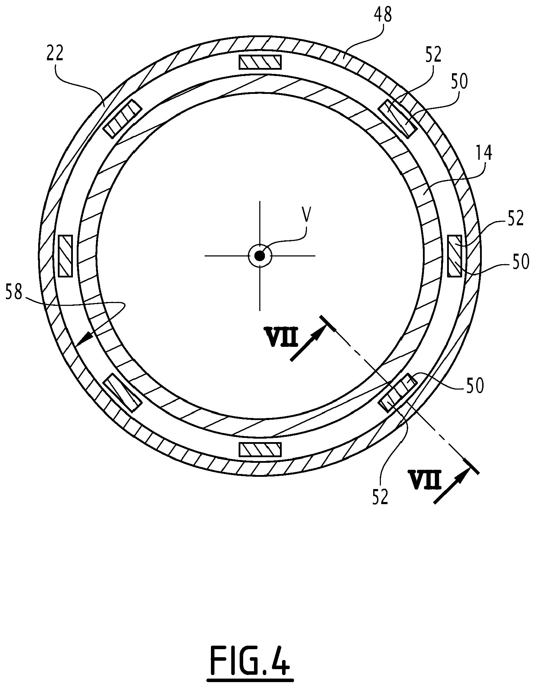

The assembly 10 further includes a subsea jacket 18 comprising a structure 20 anchored in the seabed 16 and surrounding the monopile 14 around the vertical direction V, and a central guide 22 (symbolized by double arrows in Figure 2, and represented in Figures 3 and 4) mechanically connected to the structure 20 and surrounding the monopile 14 around the vertical direction V while being vertically free with respect to the monopile.

The wind turbine 12 comprises a tower 24 fixed to the top of the monopile 14, and blades 26 rotatably mounted on the tower.

Advantageously, the tower 24 has a bolted flange 28 which mechanically connects the wind turbine 12 to the monopile 14.

The monopile 14 is for example surrounded by a body of water 30, for example a sea or a lake.

In the example, the monopile 14 has a lower portion 32 with a cylindrical outer shape, a medium portion 34 with a fustoconical shape, and an upper portion 36 with a cylindrical shape.

For example, the monopile 14 has an average external diameter D ranging from 8.0 to 11.0 meters, and a height H from seabed to top that is greater than 40 meters.

The monopile 14 is adapted for carrying all the weight of the wind turbine 12 and for being the foundation of the wind turbine for vertical loads F1. The monopile 14 is adapted to transfer horizontal loads F2, F3 and overturning moments M to the jacket 18.

The lower portion 32 penetrates in the seabed 16, for example over a height H1 that is smaller than twice the average external diameter D.

The lower portion 32 advantageously includes a suction bucket 38, which allows reducing penetration.

As a variant (not shown), the monopile 14 has a closed end at its lower extremity in the vertical direction V.

The medium portion 34 is for example under the body of water 30, whereas the upper part 36 for example emerges from the body of water 30.

Apart from the structure 20 and the central guide 22, the jacket 18 advantageously comprises bracings 39 radially connecting the central guide 22 to the structure 20, and a lower central guide 40 (symbolized by double arrows) connected to the structure 20 and surrounding the monopile 14 around the vertical direction V while being vertically free with respect to the monopile.

The jacket 18 is adapted to serve as a guide during installation of the monopile 14, and afterwards adapted to be the foundation of the assembly 10 for the overturning moments M induced by horizontal loads F4 exerted on the wind turbine 12 and wave and current loads F5 exerted on the monopile 14.

In the example, the jacket 18 vertically extends along part of the lower portion 32 of the monopile 14.

The structure 20 is adapted for resisting the horizontal loads F2, F3 applied by the monopile on the central guide 22, and in the example on the lower central guide 40, due to bending movements of the monopile 14.

The structure 20 for example comprises three or four legs 42 extending along the vertical direction V between the seabed 16 and the central guide 22, and radially with respect to the monopile 14, the legs 42 being angularly distributed around the monopile 14. For example, the structure 20 has a pyramidal shape as seen in an horizontal perspective.

The structure 20 defines main nodes 44, which the bracings 39 are connected to.

The structure 20 advantageously comprises braces 46 between the legs 42.

For example, as shown in Figure 3 and 4, the central guide 22 comprises a ring 48 surrounding the monopile 14 with clearance around the vertical direction V.

Advantageously, the central guide 22 comprises a plurality of friction pads 50 located between the ring 48 and the monopile 14 and angularly distributed around the vertical direction V. In the example, the central guide 22 also includes a plurality of metal centralizers 52 fixed on the ring 48, and a funnel 54 located above the ring 48.

The lower central guide 40 is vertically aligned with the central guide 22.

In the example, the lower central guide 40 is structurally analogous to the central guide 22.

As a variant (not shown), the lower central guide 40 may differ from the central guide 22.

Each of the bracings 39 protrudes radially from the central guide 22. Each of the bracings 39 advantageously comprises a frustoconical transition 56 radially located next to the central guide 22, the frustoconical transition thinning toward the structure 20.

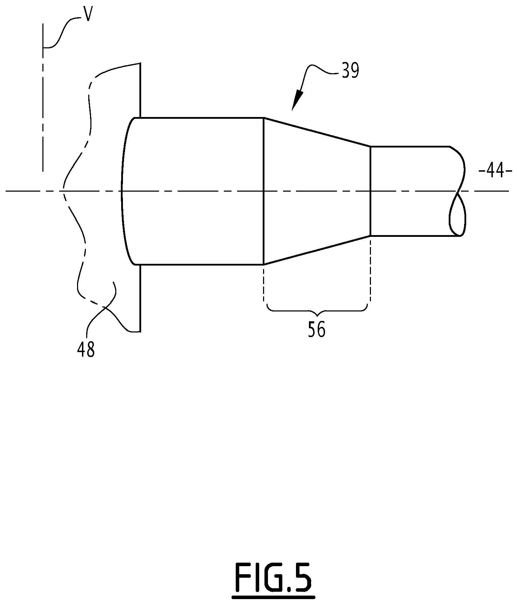

As a variant shown in Figure 5, the frustoconical transition 56 extends in between the central guide 52 and the structure 20, at a distance from the central guide 22.

The frustoconical transition 56 improves performance of the jacket 18 against punching shear and fatigue.

The friction pads 50 for example comprises a composite material including a resin, a lubricant, and optionally fibers. Such materials are for example known in themselves under the names Orkot^{®} or Ertalon^{®}.

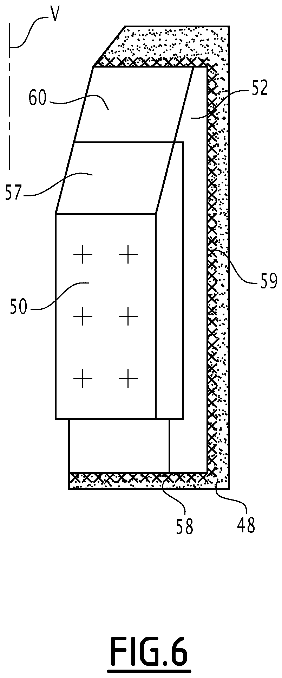

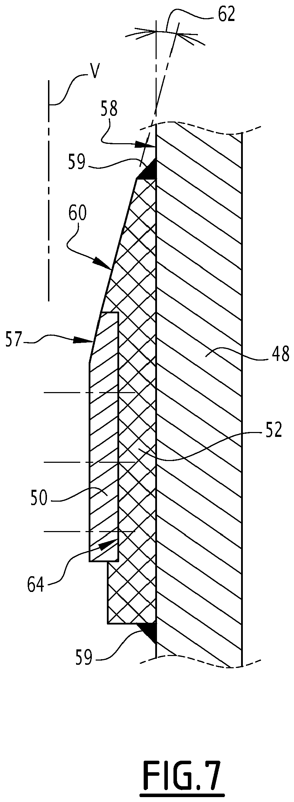

Advantageously, as best seen on Figures 6 and 7, the friction pads 50 have upper surfaces 57 forming upwardly diverging chamfers. This helps make sure that the friction pads 50 are not torn apart when the monopile 14 is introduced through the central guide 22 during installation of the assembly 10.

Advantageously, at least some of the friction pads 50 are located such that they are respectively in between the bracings 39 and the monopile.

The metal centralizers 52 are advantageously fixed on a radially inner surface 58 of the ring 48. For example, the metal centralizers 52 are fillet welded to the ring 48. The resulting fillet weld 59 fully surrounds each of the metal centralizers 52.

As shown in Figures 6 and 7, the metal centralizers 52 have upper surfaces 60 forming upwardly diverging chamfers, so as to guide the monopile 14 during installation. Advantageously, these upper surfaces 60 have a slope 62 with respect to the vertical direction V that is comprised between 15% and 30%, for example about 25%.

Advantageously, the metal centralizers 52 define housings 64 opening toward the monopile 14 and respectively receiving the friction pads 50, the friction pads protruding radially from the housings toward the monopile.

The building of the assembly 10 will now be briefly described in order to illustrate a method of building an assembly according to the invention. The building comprises the steps of anchoring the jacket 18 in the seabed 16, bringing the monopile 14 above the jacket and lowering the monopile in a vertical position through the central guide 22, introducing the monopile in the seabed, and fixing the wind turbine 12 to the monopile.

The funnel 54 and the metal centralizers 52 allow guiding the monopile 14 during its descent toward the seabed 16. The lower central guide 40 also acts as a guide for the monopile 14.

Introducing the monopile 14 in the seabed may be realized by using the suction bucket 38, or driving the monopile with a hydraulic hammer (not represented) in case there is no suction bucket.

During the lifetime of the assembly 10, the monopile 14 fully supports the vertical loads F1 created by the weight of the wind turbine 14. The jacket 18 does not support these vertical loads at all, since the central guide 22 and the lower central guide 40 are free to move with respect to the monopile 14.

The jacket 18 is able to withstand the horizontal loads F2, F3 and overturning moments M exerted by waves, currents and the wind on the monopile 14. These horizontal loads F2, F3 are received by the central guide 22, and by the lower central guide 40 in the example, and transmitted to the structure 20 of the jacket 18.

Thanks to the above features, the monopile 14 is guided by the jacket 18, which arises the possibility to limit and optimize the penetration of the monopile 14 in the seabed 16, therefore its length and weight, all other things being equal. The jacket 18 also enables implementing the suction bucket 38. Such suction bucket also allows reducing noise during installation (no hydraulic hammer). Another advantage is to limit the required diameter D of the monopile 14.

As a result, the cost of producing and installing the assembly 10 is reduced, which reduces the offshore electricity cost in some situations where jackets are generally used, because monopiles would be too large to be produced and/or too expensive, or to further reduce the electricity cost in some situation where monopiles can be used.

By keeping the monopile 14 diameter within reasonable figures, the assembly 10 also favours a bolted flange 28 between the wind turbine 12 and the monopile 14.

The invention also provides design and installation flexibility against water depth and soil conditions variations over large windfarms sites, thus improving serial fabrication and reducing installation costs.

The invention allows monopiles to access to larger water depths despite their slenderness. At equivalent depths, the invention reduces the monopile penetration H1. At equivalent depths, the invention reduces the monopile required diameter D. As a consequence, optimization of overall monopiles weight becomes possible (reduction of thickness, increase of yield strength).

The invention provides design flexibility for windfarms with water depths variation (conventional monopiles may be used in shallowest part of the field and may be guided for the deepest one). The invention provides flexibility in the design of monopiles against soil conditions as guiding is used whenever soil characteristics shows poor lateral behavior. The invention may also improve the design, procurement and installation schedule: a serial fabrication of standardized simple subsea jackets available from the shelf is possible.

In general, the invention is adapted to the serial fabrication and installation in windfarm development projects. The invention is also compatible with modern installation vessels, such as Huisman's Windfarms Installation Vessel designed for serial installation of monopiles and wind turbines, reducing logistics and marshalling costs.

It can be contemplated to add an anti-scouring deflector at the bottom of the jacket 18 (at mudmat level) in order to avoid the cost of installing scouring protection at a later stage.

## Claims

1. An assembly (10) for producing offshore electricity comprising:
- a wind turbine (12), and
- a monopile (14) extending along a vertical direction (V) and fully supporting the wind turbine (12), the monopile (14) penetrating in a seabed (16),
**characterized in that** it further includes a subsea jacket (18) comprising:
- a structure (20) anchored in the seabed (16) and surrounding the monopile (14) around the vertical direction (V), and
- a central guide (22) fixed on the structure (20) and surrounding the monopile (14) around the vertical direction (V) while being vertically free with respect to the monopile (14), the structure (20) being adapted for resisting horizontal loads (F2) applied by the monopile (14) on the central guide (22) due to bending movements of the monopile (14).

2. The assembly (10) according to claim 1, wherein the jacket (18) further comprises a lower central guide (40) fixed on the structure (20) and surrounding the monopile (14) around the vertical direction (V) while being vertically free with respect to the monopile (14), the structure (20) being adapted for resisting horizontal loads (F3) applied by the monopile (14) on the lower central guide (40).

3. The assembly (10) according to claim 1 or 2, wherein the central guide (22) comprises:
- a ring (48) surrounding the monopile (14) with clearance, and
- a plurality of friction pads (50) located between the ring (48) and the monopile (14) and angularly distributed around the vertical direction (V).

4. The assembly (10) according to claim 3, wherein the friction pads (50) comprise a composite material including a resin, a lubricant and optionally fibers.

5. The assembly (10) according to claim 3 or 4, further comprising a plurality of metal centralizers (52) fixed on the ring (48) and having upper surfaces (60) forming upwardly diverging chamfers.

6. The assembly (10) according to claim 5, wherein the metal centralizers (52) define housings (64) opening toward the monopile (14) and respectively receiving the friction pads (50), the friction pads (50) protruding radially from the housings (64) toward the monopile (14).

7. The assembly (10) according to any one of claims 3 to 6, wherein the friction pads (50) have upper surfaces (57) forming upwardly diverging chamfers.

8. The assembly (10) according to any one of claims 1 to 7, further comprising bracings (39) radially connecting the central guide (22) and the structure (20).

9. The assembly (10) according to claim 8, wherein each of the bracings (39) comprises a frustoconical transition (56) radially located next to the central guide (22) or in between the central guide (22) and the structure (20), the frustoconical transition (56) thinning toward the structure (20).

10. The assembly (10) according to any one of claims 1 to 9, wherein the structure (20) comprises three or four legs (42) extending along the vertical direction (V) between the seabed (16) and the central guide (22), and radially with respect to the monopile (14), the legs (42) being angularly distributed around the monopile (14).

11. The assembly (10) according to claim 10, wherein the structure (20) comprises braces (46) between the legs (42).

12. The assembly (10) according to any one of claims 1 to 10, wherein the monopile (14) includes a suction bucket (38).

13. The assembly (10) according to any oneof claims 1 to 11, wherein the monopile (14) has an average external diameter (D), and penetrates in the seabed (16) over a height (H1) that is smaller than twice said average external diameter (D).

14. The assembly (10) according to any one of claims 1 to 13, wherein the monopile (14) has an average external diameter (D) ranging from 8.0 to 11.0 meters, and/or a height (H1) from seabed (16) to top that is greater than 40 meters.

15. A method of building an assembly (10) according to any one of claims 1 to 14, comprising:
- anchoring the jacket (18) in the seabed (16),
- bringing the monopile (14) above the jacket (18) and lowering the monopile (14) in a vertical position through the central guide (22),
- introducing the monopile (14) in the seabed (16), and
- fixing the wind turbine (12) to the monopile (14).
